# EUROPEAN PATENT SPECIFICATION

(11) **EP 2 252 100 B1**
(45) Date of publication and mention of the grant of the patent: **05.09.2012**
(21) Application number: 09160412.4
(22) Date of filing: 15.05.2009
(51) Int. Cl.: H04W 24/02, H04L 12/24, H04W 84/04

(54) **Method and a device for determining which nodes are involved into a parameters optimisation process**
Verfahren und Vorrichtung zur Bestimmung, welche Knoten in einem Parameteroptimierungsverfahren involviert sind
Procédé et dispositif pour déterminer les noeuds qui sont impliqués dans un processus d'optimisation des paramètres

(43) Date of publication of application: 17.11.2010
(73) Proprietor: Mitsubishi Electric R&D Centre Europe B.V., 1119 NS Schiphol Rijk (NL); Mitsubishi Electric Corporation, Tokyo 100-8310 (JP)
(72) Inventor: Gresset, Nicolas, 35708, RENNES Cedex 7 (FR); Khanfouci, Mourad, 35708, RENNES Cedex 7 (FR); Bonneville, Hervé, 35708, RENNES Cedex 7 (FR)
(74) Representative: Maillet, Alain

(56) References cited:
- WO-A1-02/080458
- VODAFONE GROUP ET AL: "Text Proposal for HNB TR25.9xx: Guidance on HNB Self-Configuration" 3GPP DRAFT; R4-082315, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Scotland; 20080928, 28 September 2008 (2008-09-28), XP050325601 [retrieved on 2008-09-28]
- QUALCOMM EUROPE: "Overview of Interference Scenarios for the Home NodeB Enhanced Interference Management Study Item" 3GPP DRAFT; R4-091227, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Seoul, Korea; 20090319, 19 March 2009 (2009-03-19), XP050342006 [retrieved on 2009-03-19]

## Description

The present invention relates generally to a method and a device for determining which nodes of a wireless cellular telecommunication network are involved into a parameters optimisation process.

In classical wireless cellular telecommunication networks, parameters optimisation processes are executed in order to improve the performance of the wireless cellular telecommunication network.

Recently, home base stations are introduced into wireless cellular telecommunication networks. The amount of home base stations in a given area may be very important and makes the parameters optimisation process very complex.

Parameters are values of the physical layer used by base stations or home base stations for transferring signals in their respective cell like frequency band used, transmit power, time scheduling and/or cell identifiers. During a parameters optimisation process, a set of parameters is assigned to base stations or home base stations and it is tested if that set of parameters optimizes the performance of the wireless cellular telecommunication network. If the set of parameters does not optimize the performance of the wireless cellular telecommunication network, the base stations or home base stations are rescheduled and a new set of parameter is tested.

For example, if the average interference level observed at the terminals is to be minimized, the check if a set of parameters is correct is executed from measures of interference information experienced between home base stations and/or between home base stations and base stations and nodes.

Interference information may be provided by the base stations and/or home base stations and/or mobile terminals located in the cells of the base stations or home base stations.

The optimization process may need frequent parameter reconfigurations in order to achieve the optimal parameters setting. Indeed, parameters such as cell identifiers are critical for service operation and modifying them too frequently would cause inacceptable temporary coverage holes, service unavailability/ drop calls...etc.

Furthermore, some nodes have in average more users in their coverage than others, or their owner might make less use of their node than other users.

Different kinds of nodes are observed in a wireless cellular telecommunication network which may be characterized by their availability for reconfiguration ranging from not reconfigurable to reconfigurable on demand.

As the number of base stations and/or home base stations increases, it is almost impossible to find periods of time where all the base stations and/or all the home base stations are available for an optimisation process, without degrading the quality of the communication.

The paper of Vodaphone entitled "Text proposal for HNB TR25.9xx Guidance on HNB self configuration" discloses detection of interference by home node B.

The present invention aims at providing a new optimisation process.

To that end, the present invention concerns a method for determining which nodes of a wireless cellular telecommunication network are involved into a parameters a node being a base station or a home nose station according to claim 1.

The present invention also concerns a device for determining which nodes of a wireless cellular telecommunication network are involved into a parameters optimisation process, a node being a base station or a home base station according to claim 13.

As plural sets of nodes are formed from availabilities prior to the reception of the message, the selection of the nodes which are involved in the optimisation process is rapid.

Furthermore, as the parameters are determined prior to the reception of the message, the optimisation process is rapid.

Furthermore, the present invention additionally proposes to pre-compute well-selected subsets of parameters optimisation and store them to apply them opportunistically.

As the nodes of the set of nodes are nodes having an expected availability in a time period from the reception of the message notifying the availability of the node for the parameters optimisation process, it is possible to know which other node than the node having sent the message notifying the availability of the node for the parameters optimisation process will have with a good probability of availability for parameters optimisation process.

According to a particular feature, the selected set of nodes is one set of nodes which comprises the node which sent a message representative of the node availability for the parameters optimisation process.

Thus, a node signalling its availability for parameters reconfiguration might be reconfigured rapidly even if the time of availability of this node is small.

According to a particular feature, the selected set of nodes may be the set of nodes which comprises no node having a rank higher than the rank of the node which sent the message representative of the node availability for the parameters optimisation process.

Thus, during the parameters optimization process wherein the parameters reconfiguration occurs, the nodes with higher ranks are not taken into account as they are nodes which have less availabilities for reconfiguration. Then, the applied parameters reconfiguration do not drastically degrades the system performance. Indeed, the time between the first parameters reconfiguration of a node of a set of node and the last reconfiguration of a node of the set of nodes is short. That short duration avoids that the unstable period which occurs when all the nodes of the set of nodes are not reconfigured disturb too much the wireless cellular telecommunication network.

According to a particular feature, the message notifying the availability of the node for the parameters optimisation process is received at a given time and the selected set of nodes is the set of nodes which corresponds to a set of nodes determined for a time period including or close to said given time.

Thus, the choice of the configuration for a set of nodes is easy.

According to a particular feature, if the node which sends the message notifying the availability of the node for the parameters optimisation process has the lowest rank, no set of nodes is selected.

Thus, as the optimization of a single node often leads to no performance improvement, and since the lower rank node availability happens often, the complexity is limited and the stability of the system is further improved.

According to a particular feature, the message notifying the availability of the node for the parameters optimisation process is received at a given time and the selected set of nodes is a set of nodes which corresponds to a set of nodes determined for a time period including or close to said given time.

Thus, the choice of the configuration for a set of nodes is easy.

According to a particular feature, the method comprises further step of waiting during a time delay once the parameters optimisation process is executed.

Thus, the number of reconfiguration is limited, the optimization of parameters of set of nodes is possible with low complexity.

According to a particular feature, once a node comprised in the selected set of nodes sends the message notifying the availability of the node for the parameters optimisation process within the time period, the determined parameters for the node comprised in the selected set of nodes are applied for the node.

Thus, a node in the selected set of nodes is reconfigured as soon as its availability for being reconfigured happens during the time period.

When a parameters optimisation process is executed, the parameters of the nodes in the selected set of nodes are stored and applied for one node once the message notifying the availability of said node is received.

Thus, this allows for applying the last, and thus the most profitable, parameters configuration to a node.

According to a particular feature, the steps of receiving the message from one of the nodes, of selecting one set of nodes among the sets of nodes according to the rank of the node which sent the message notifying the availability of the node for the parameters optimisation process, of executing parameters optimisation process and waiting are consecutive steps executed successively and continuously.

According to a particular feature, the steps of obtaining information related to the expected availability of nodes for a parameters optimisation process, of ranking the nodes according to the expected availabilities, of forming plural sets of nodes according to the expected availabilities and of determining, for each set of nodes, parameters for each node of the set of nodes are executed successively and periodically or on particular event.

According to a particular feature, the method comprises further step of memorizing the ranks of the nodes, the formed sets of nodes and the determined parameters, for each node of each set of nodes.

According to a particular feature, parameters determined for one node comprised in a first set of nodes may be different from the parameters determined for the node comprised in a second set of nodes different from the first set of nodes.

Thus, it is possible to adapt parameters according to the other nodes comprised in the set of nodes.

According to a particular feature, the device for determining which nodes of a wireless cellular telecommunication network are involved into the parameters optimisation process is a dedicated device or is comprised in a node of the wireless cellular telecommunication network or in a base station of the wireless cellular telecommunication network.

According to still another aspect, the present invention concerns a computer program which can be directly loadable into a programmable device, comprising instructions or portions of code for implementing the steps of the method according to the invention, when said computer program is executed on a programmable device.

Since the features and advantages relating to the computer program are the same as those set out above related to the method and device according to the invention, they will not be repeated here.

The characteristics of the invention will emerge more clearly from a reading of the following description of an example embodiment, the said description being produced with reference to the accompanying drawings, among which :
Fig. 1 represents a wireless cellular telecommunication network in which the present invention is implemented;
Fig. 2 is a diagram representing the architecture of a fleet coordinator in which the present invention is implemented ;
Fig. 3 discloses an example of an algorithm for determining sets of nodes and for ranking nodes according to the present invention ;
Fig. 4 represents obtained chronograms of expected availability of nodes in the time ;
Fig. 5 represents expected determined sets of nodes according to the obtained chronograms of expected availability of nodes ;
Fig. 6 discloses an example of an algorithm for selecting a set of nodes when a node is available for parameter update ;
Fig. 7 represents real chronograms of availability of nodes in the time and selected set of nodes.

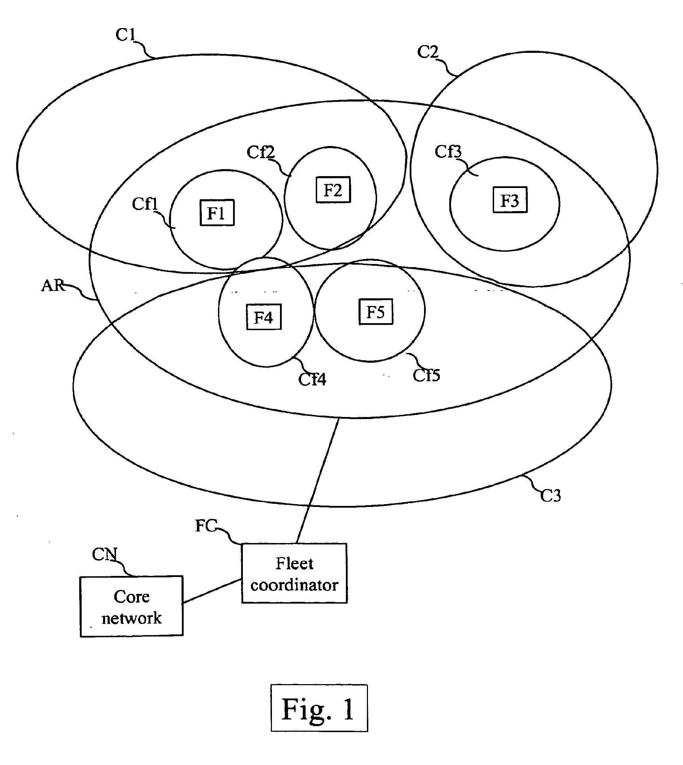

**Fig. 1** represents a wireless cellular telecommunication network in which the present invention is implemented.

The wireless cellular telecommunication network is composed of plural cells of base stations not shown in the Fig. 1.

Only three cells C1, C2 and C3 are represented in Fig. 1 for the sake of clarity but the wireless cellular telecommunication network comprises a more important number of cells.

The wireless cellular telecommunication network comprises plural micro-cells of home base stations.

Only five home base stations F1 to F5 and five micro-cells Cf1 to Cf5 are represented in Fig. 1 for the sake of clarity but the wireless cellular telecommunication network comprises a more important number of nodes and cells.

The home base stations F1 to F5 are named also femto base stations or pico base stations.

The base stations are able to receive signals transferred by mobile terminals not shown in Fig. 1 which are located in their respective cell C1 to C3. The base stations transfer signals which can be received and processed by mobile terminals located in their respective cell C1 to C3.

The home base stations F1 to F5 are able to receive signals transferred by mobile terminals which are located in their respective cell Cf1 to Cf5. The home base stations F1 to F5 transfer signals which can be received and processed by mobile terminals located in their respective cell Cf1 to Cf5.

The wireless cellular telecommunication network comprises at least one core network device CN which manages the operation of the wireless cellular telecommunication network.

The home base stations F1 to F5 are comprised in an area AR managed by a device named fleet coordinator FC.

In the Fig. 1, the fleet coordinator FC is a device which is different from base stations, home base stations F1 to F5 or core network device CN. In other examples of realisation, the fleet coordinator FC may be comprised in a home base station F1 to F5 that may change or not over time thanks to an election procedure for example or may be comprised in a base station or in one core network device CN.

The cells Cf1 and Cf2 are located in the cell C1, the cells Cf4 and Cf5 are located in the cell C3 and the cell Cf3 is located in the cell C2.

As the cells Cf1 to Cf5 are close to each other and comprised in cells C1 to C3, the signals transferred and/or received by the home base stations F1 to F5 and/or the base stations interfere each other if the parameters of the home base stations F1 to F5 and/or the base stations are not well chosen.

In the present invention, a node is a base station or a home base station.

According to the invention, the fleet coordinator FC obtains when and which part of the nodes that may be available for parameters optimisation process.

A node is available for a parameters optimisation process if the node is not serving active mobile terminal and/or if no or few idle mobile terminals are not located in the cell of the node.

According to the invention, the fleet coordinator FC ranks the nodes according to the delay between two time periods in which the node is available for a parameters optimisation process and/or according to the occurrence of expected availability of the nodes for a parameters optimisation process and/or according to the total duration of expected availability for a parameters optimisation process within a time period.

According to the invention, the fleet coordinator FC determines plural sets of nodes for which a parameters optimisation process can be conducted.

According to the invention, the fleet coordinator FC determines parameters for each node of each set of nodes.

According to the invention, the fleet coordinator FC:
- receives a message from one of the nodes, the message notifying the availability of the node for the parameters optimisation process,
- selects one set of nodes among the sets of nodes at least according to at least the rank of the node which sent the message notifying the availability of the node for the parameters optimisation process,
- executes parameters optimisation process for the nodes comprised in the selected set of nodes using the determined parameters for the nodes of the selected set of nodes.

During the parameters optimisation process, the nodes of the selected set of nodes change the parameters they were currently using to new parameters determined for the nodes of the set of nodes and for the set of nodes.

The parameters of nodes which do not belong to the set of nodes are not modified.

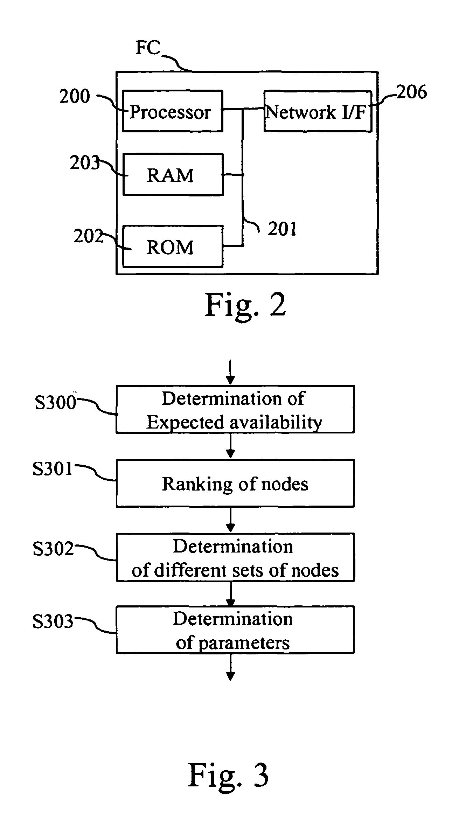

**Fig. 2** is a diagram representing the architecture of a fleet coordinator in which the present invention is implemented.

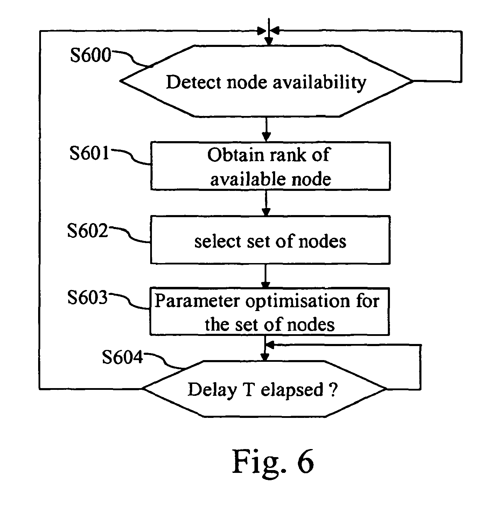

The fleet coordinator FC has, for example, an architecture based on components connected together by a bus 201 and a processor 200 controlled by the programs as disclosed in Figs. 3 and 6.

It has to be noted here that, instead of being based on a processor, the architecture of the fleet coordinator FC may be based on dedicated integrated circuits.

The bus 201 links the processor 200 to a read only memory ROM 202, a random access memory RAM 203 and a network interface 206.

The memory 203 contains registers intended to receive variables and the instructions of the programs related to the algorithms as disclosed in Figs. 3 and 6.

The processor 200 controls the operation of the network interface 206.

The read only memory 202 contains instructions of the programs related to the algorithms as disclosed in Figs. 3 and 6, which are transferred, when the home base station HBS is powered on, to the random access memory 203.

The fleet coordinator FC is connected to a telecommunication network through the network interface 206.

For example, the network interface 206 is a DSL (Digital Subscriber Line) modem, or an ISDN (Integrated Services Digital Network) interface, etc. Through the network interface 206, the fleet coordinator FC may transfer and/or receive messages to the core network device CN of the wireless cellular telecommunication network and to the nodes F1 to F5 and base stations of the wireless cellular telecommunication network.

**Fig. 3** discloses an example of an algorithm for determining sets of nodes and for ranking nodes according to the present invention.

More precisely, the present algorithm is executed by the processor 200 of the fleet coordinator FC. The present algorithm is executed periodically or on the reception of message from at least one node F1 to F5 or once a parameters optimisation process has been executed.

At step S300, the processor 200 obtains the expected periods of availability of the nodes F1 to F5 which are located in the area AR the fleet coordinator FC manages.

For example, for each node F1 to F5 located in the area AR, the expected period or periods of availability for parameters optimisation process is or are taken for example from statistics of the node and deduced from the last message or messages of availability transferred by the node.

In another mode of realisation, the node transmits its schedule of availability to the fleet coordinator FC. The schedule may be defined by the owner of the node that configures one or plural preferred time slots for availability for a parameters optimisation process. The schedule of availability may vary in time, for example according to unexpected events.

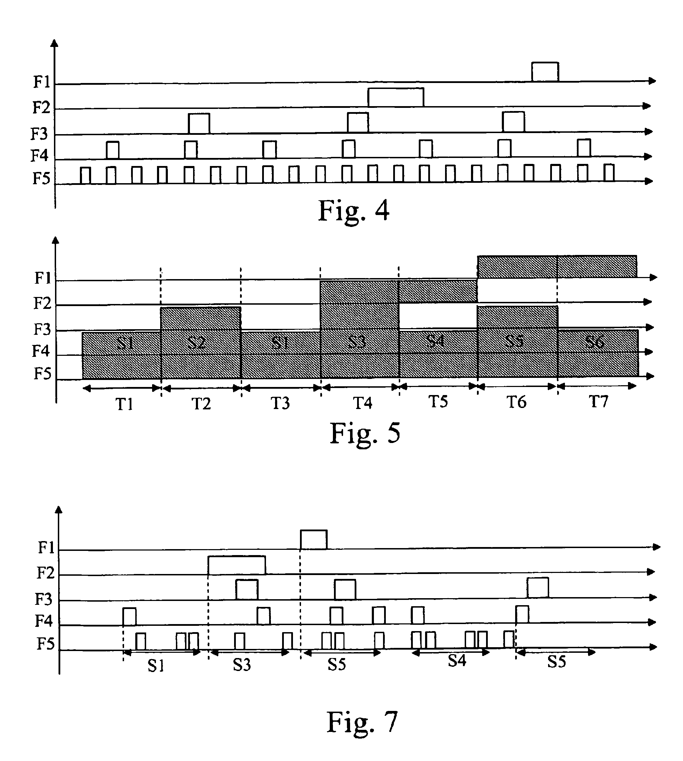

An example of obtained chronograms of expected availability of nodes in the time is given in Fig. 4.

**Fig. 4** represents obtained chronograms of expected availability of nodes in the time.

The availabilities are considered as expected as they have not occurred yet.

For example, if availabilities are predicted, some prediction errors may occur. Even if a schedule of availability is received, the availabilities disclosed in the schedule can only be expected availabilities in the sense that the node may be damaged or the owner of the node may change at any time the schedule.

The rectangles shown in Fig. 4 represent the expected period of availability of nodes, for example the home base stations F1 to F5.

The home base station F5 is the home base station which has the most important number of expected periods of availability and total time duration of expected availability for parameters optimisation process.

The home base station F4 is the home base station which has the next number of expected periods of availability and total time duration of expected availability for parameters optimisation process.

The home base station F3 is the home base station which has the next number of expected periods of availability and total time duration of expected availability for parameters optimisation process.

The home base station F2 is the home base station which has the next number of expected periods of availability and total time duration of expected availability for parameters optimisation process.

The home base station F1 is the home base station which has the lowest number of expected periods of availability and total time duration of expected availability for parameters optimisation process and the lowest available period of expected availability for parameters optimisation process.

At step S301, the processor 200 ranks the nodes which are located in the area AR the fleet coordinator FC manages.

According to the example of Fig. 4, the processor 200 ranks the home base stations F1 to F5 which are located in the area AR the fleet coordinator FC manages.

The nodes F1 to F5 are ranked for example according to their respective updating rate statistics and/or according to their respective traffic load and/or according to the number of active/idle mobile terminals which are located in their respective cell Cf and/or according to their respective next probable time of availability for parameters optimisation process and/or according to the number of period or periods of expected availability or parameters optimisation process and/or according to total time duration of expected availability for parameters optimisation process.

According to the example of Fig. 4, the node F1 is ranked as the first node, the node F2 is ranked as the second node, the node F3 is ranked as the third node, the node F4 is ranked as the fourth node and the node F5 is ranked as the fifth node.

It has to be noted here that a rank can be given only to one node or plural nodes may share the same rank.

The rank of each node F1 to F5 is memorised in the RAM memory 203.

At step S302, the processor 200 determines different sets of nodes which may be selected for parameters optimisation process.

An example of determined sets of nodes for parameters optimisation process is given in Fig. 5.

**Fig. 5** represents an example of expected determined sets of nodes according to the obtained chronograms of expected availability of nodes.

Six different sets of nodes for parameters optimisation process are shown in Fig. 5.

Each set of nodes is applicable for a given delay T.

The delay T is defined as the maximum accepted period of time during which parameters for nodes of set of nodes should be used by each node of the set of nodes once the node becomes available for the parameter optimisation process. This corresponds to a transition period between the optimisation process of a first node in a set of nodes and the last one. Thus, the chronogram is used for selecting high-relevance set of nodes, and computing optimised parameters for them. The optimized parameters are applied opportunistically from the received messages, the expected nodes in next T instant.

The delay T may be constant or may vary in time and/or may vary according to the number of nodes comprised in a set of nodes. The delay T may correspond to a maximum acceptable period of time in which the behaviour of the wireless cellular telecommunication network is not optimal.

The delay T may correspond to a period of time which enables that an important number of nodes may be comprised in the sets of nodes.

The delay T may be a compromise between above mentioned definitions.

For example, the chronogram of Fig. 5 is partitioned into seven periods of times T1 to T7, each of them being equal to the delay T.

The grey rectangles show that a node, for example a home base station F, is comprised in one given set of nodes.

The set of nodes S1 comprises the home base stations F4 and F5 as their period of expected availability for parameters optimisation process occurs in the periods of time T1 or T3.

The set of nodes S2 comprises the home base stations F3, F4 and F5 as their period of expected availability for parameters optimisation process occurs in the period of time T2.

The set of nodes S3 comprises the home base stations F2, F3, F4 and F5 as their period of expected availability for parameters optimisation process occurs in the period of time T4.

The set of nodes S4 comprises the home base stations F2, F4 and F5 as their period of expected availability for parameters optimisation process occurs in the period of time T5.

The set of nodes S5 comprises the home base stations F1, F3, F4 and F5 as their period of expected availability for parameters optimisation process occurs in the period of time T6.

The set of nodes S6 comprises the home base stations F1, F4 and F5 as their period of expected availability for parameters optimisation process occurs in the period of time T7.

Each set of nodes is memorised in the RAM memory 203 in combination with information identifying the time periods corresponding to the sets of nodes in the Fig. 5.

Information identifying time periods corresponding to the sets of nodes in Fig. 5 may identify the previous set or sets of nodes in Fig. 5.

At step S303, the processor 100 determines, for each set of nodes, parameters for each node of the set of nodes.

Parameters determined for one node comprised in a first set of nodes may be different from the parameters determined for the node comprised in a second set of nodes different from the first set of nodes.

For example, parameters determined for home base station F3 for the set of nodes S2 are different from parameters determined for home base station F3 for the set of nodes S3 and are different from parameters determined for home base station F3 for the set of nodes S5.

After that, the processor 200 interrupts the present algorithm.

**Fig. 6** discloses an example of an algorithm for selecting a set of nodes when a node is available for parameter update.

More precisely, the present algorithm is executed by the processor 200 of the fleet coordinator FC.

At step S600, the processor 200 checks if a message representative of a node availability for a parameters optimisation process is received through the network interface I/F 206.

As far as no message representative of a node availability for a parameters optimisation process is received through the network interface I/F 206, the processor 200 executes the step S600.

**Fig. 7** represents real chronograms of availability of nodes for parameters optimisation process in the time and selected set of nodes.

The rectangles shown in Fig. 7 represent the real period of availability of the home base stations F1 to F5 for parameters optimisation process.

If a message representative of a node availability for a parameters optimisation process is received through the network interface I/F 206, the processor 200 moves to step S601.

According to the example of Fig. 7, the first node which sends a message representative of a node availability for a parameters optimisation process is the home base station F4.

At step S601, the processor 200 obtains the rank of the node which sent the message representative of a node availability for a parameters optimisation process received at step S600.

The home base station F4 is the node ranked at the fourth position.

At step S602, the processor 200 determines a set of nodes for parameters optimisation process.

The selected set of nodes is one set of nodes which comprises the node which sent a message representative of the node availability for the parameters optimisation process.

For example, the selected set of nodes may be the set of nodes which comprises no node having an upper rank than the node which sent the message representative of the node availability for the parameters optimisation process.

For example, the message notifying the availability of the node for the parameters optimisation process is received at a given time, the selected set of nodes is the set of nodes which corresponds to a set of nodes determined for a time period including or close to said given time.

For example, if the node which sends the message notifying the availability of the node for the parameters optimisation process has the lowest rank, no set of nodes is selected.

For example, the message notifying the availability of the node for the parameters optimisation process is received at a given time and if the node which sends the message notifying the availability of the node for the parameters optimisation process has the lowest rank, the selected set of nodes is the set of nodes which corresponds to a set of nodes determined for a time period including or close to said given time.

Above mentioned example may also be combined.

The processor 200 selects the set of nodes S1 as the home base station F4 is comprised in the set of nodes S1 and is in a time period in Fig. 5 which corresponds to the time of reception of the message notifying that the home base station F4 is available for parameters optimisation process.

At step S603, a parameters optimisation process starts for the nodes comprised in the selected set S1 and the delay T is activated.

The parameters optimisation process starts for the home base stations F4 and F5.

The parameters determined at step S303 of each node of the set of nodes S1 are used for the parameters optimisation process.

According to example of Fig. 7, parameters determined for home base station F4 when it is comprised in the set of nodes S1 are used by the home base station F4. Once a message notifying that the home base station F5 is available for parameters optimisation process, the parameters determined for home base station F5 when it is comprised in the set of nodes S1 are used by the home base station F5.

At next step S604, the processor 200 checks if the delay T is elapsed or not.

The delay T may be constant or may vary in time and/or may vary according to the number of nodes comprised in a set of nodes. The delay T may correspond to a maximum acceptable period of time in which the behaviour of the wireless cellular telecommunication network is not optimal. The delay T may correspond to a period of time which enables that an important number of nodes may be comprised in the sets of nodes. The delay T may be a compromise between above mentioned definitions.

The processor 200 executes the step S604 as far as the delay is not elapsed.

It has to be noted here that if during the delay T, a message notifying that a node which does not belong to the currently selected set of nodes is available for parameters optimisation process, the processor may return to step S601 in order to select another set of nodes.

If the delay T is elapsed, the processor 200 returns to step S600.

According to the example of Fig. 7, the home base station F2 sends a message representative of a node availability for a parameters optimisation process.

The home base station F2 is the node ranked at the second position.

At step S602, the processor 200 selects a set of nodes for parameters optimisation process.

The selected set of nodes is one set of nodes which comprises the node which sent a message representative of the node availability for the parameters optimisation process. The selected set of nodes may be the set of nodes S3 or S4.

The selected set of nodes may be the set of nodes which comprises no node having an upper rank than the node which sent the message representative of the node availability for the parameters optimisation process. The selected set of nodes may be the set of nodes S3 or S4.

For example, the processor 200 may select the set of nodes among the nodes S3 or S4, the set of nodes which comprises the most important number of nodes.

For example, the message notifying the availability of the node for the parameters optimisation process is received at a given time, the selected set of nodes is the set of nodes which corresponds to a set of nodes determined for a time period including or close to said given time. The selected set of nodes may be the set of nodes S3.

At step S603, a parameters optimisation process starts for the nodes comprised in the selected set S3 and the delay T is activated.

The parameters optimisation process starts for the nodes F2, F3, F4 and F5.

According to example of Fig. 7, parameters determined for home base station F2 when it is comprised in the set of nodes S3 are used by the home base station F2.

Once a message notifying that the home base station F5 is available for parameters optimisation process, the parameters determined for home base station F5 when it is comprised in the set of nodes S3 are used by the home base station F5.

Once a message notifying that the home base station F3 is available for parameters optimisation process, the parameters determined for home base station F3 when it is comprised in the set of nodes S3 are used by the home base station F3.

Once a message notifying that the home base station F4 is available for parameters optimisation process, the parameters determined for home base station F4 when it is comprised in the set of nodes S3 are used by the home base station F4.

At next step S604, the processor 200 checks if the delay T is elapsed or not. If the delay T is elapsed, the processor 200 returns to step S600.

According to the example of Fig. 7, the home base station F1 sends a message representative of a node availability for a parameters optimisation process.

The home base station F1 is the node ranked at the first position.

At step S602, the processor 200 selects a set of nodes for parameters optimisation process.

The selected set of nodes is one set of nodes which comprises the node which sent a message representative of the node availability for the parameters optimisation process. The selected set of nodes may be the set of nodes S5 or S6.

The selected set of nodes may be the set of nodes which comprises no node having an upper rank than the node which sent the message representative of the node availability for the parameters optimisation process. The selected set of nodes may be the set of nodes S5 or S6.

For example, the message notifying the availability of the node for the parameters optimisation process is received at a given time, the selected set of nodes is the set of nodes which corresponds to a set of nodes determined for a time period including or close to said given time. The selected set of nodes may be the set of nodes S5.

At step S603, a parameters optimisation process starts for the nodes comprised in the selected set of nodes S5 and the delay T is activated.

The parameters optimisation process starts for the nodes F1, F3, F4 and F5.

According to the example of Fig. 7, parameters determined for home base station F1 when it is comprised in the set of nodes S5 are used by the home base station F1. Once a message notifying that the home base station F5 is available for parameters optimisation process, the parameters determined for home base station F5 when it is comprised in the set of nodes S5 are used by the home base station F5.

Once a message notifying that the home base station F4 is available for parameters optimisation process, the parameters determined for home base station F4 when it is comprised in the set of nodes S5 are used by the home base station F4.

Once a message notifying that the home base station F3 is available for parameters optimisation process, the parameters determined for home base station F3 when it is comprised in the set of nodes S5 are used by the home base station F3.

At next step S604, the processor 200 checks if the delay T is elapsed or not. If the delay T is elapsed, the processor 200 returns to step S600.

According to the example of Fig. 7, the home base stations F4 and F5 send a message representative of a node availability for a parameters optimisation process.

The home base station F4 is the node ranked at the fourth position and the home base station F5 is ranked at the fifth position.

At step S602, the processor 200 selects a set of nodes for parameters optimisation process. The set of nodes is selected considering the node having the highest rank among home base stations F4 and F5.

The selected set of nodes is one set of nodes which comprises the node which sent a message representative of the node availability for the parameters optimisation process. The selected set of nodes may be the set of nodes S1, S2, S3, S4, S5 or S6.

The selected set of nodes may be the set of nodes which comprises no node having an upper rank than the node which sent the message representative of the node availability for the parameters optimisation process. The selected set of nodes may be the set of nodes S1.

For example, the message notifying the availability of the node for the parameters optimisation process is received at a given time, the selected set of nodes is the set of nodes which corresponds to a set of nodes determined for a time period including or close to said given time. The selected set of nodes may be the set of nodes S4.

The processor 200 selects the set of nodes S4.

At step S603, a parameters optimisation process starts for the nodes comprised in the selected set S4 and the delay T is activated.

The parameters optimisation process starts for the nodes F4, F5 and F2.

According to example of Fig. 7, parameters determined for home base station F4 when it is comprised in the set of nodes S4 are used by the home base station F4. Once a message notifying that the home base station F5 is available for parameters optimisation process, the parameters determined for home base station F5 when it is comprised in the set of nodes S4 are used by the home base station F5.

As no message notifying that the home base station F2 is available for parameters optimisation process, the parameters determined for home base station F2 when it is comprised in the set of nodes S4 are not used by the home base station F2. At next step S604, the processor 200 checks if the delay T is elapsed or not. If the delay T is elapsed, the processor 200 returns to step S600.

According to the example of Fig. 7, the home base station F5 sends a message representative of a node availability for a parameters optimisation process.

The home base station F5 is the node ranked at the fifth position.

At step S602, the processor 200 selects a set of nodes for parameters optimisation process.

As the home base station F5 which sends the message notifying the availability of the node for the parameters optimisation process has the lowest rank, no set of nodes is selected.

According to the example of Fig. 7, the home base station F4 sends a message representative of a node availability for a parameters optimisation process.

The selected set of nodes is one set of nodes which comprises the node which sent a message representative of the node availability for the parameters optimisation process. The selected set of nodes may be the set of nodes S2, S3, or S5.

The selected set of nodes may be the set of nodes which comprises no node having an upper rank than the node which sent the message representative of the node availability for the parameters optimisation process. The selected set of nodes may be the set of nodes S1.

For example, the message notifying the availability of the node for the parameters optimisation process is received at a given time, the selected set of nodes is the set of nodes which corresponds to a set of nodes determined for a time period including or close to said given time. The selected set of nodes may be the set of nodes S5.

The processor 200 selects for example the set S5.

At step S603, a parameters optimisation process starts for the nodes comprised in the selected set S2 and the delay T is activated.

The parameters optimisation process starts for the nodes F3, F4 and F5.

According to example of Fig. 7, parameters determined for home base station F4 when it is comprised in the set of nodes S5 are used by the home base station F4. Once a message notifying that the home base station F3 is available for parameters optimisation process, the parameters determined for home base station F3 when it is comprised in the set of nodes S5 are used by the home base station F3.

As no message notifying that the home base stations F1 and F5 is available for parameters optimisation process, the parameters determined for home base stations F1 and F5 when they are comprised in the set of nodes S5 are not used by the home base stations F1 and F5.

At next step S604, the processor 200 checks if the delay T is elapsed or not. If the delay T is elapsed, the processor 200 returns to step S600.

As the algorithms of the Figs. 3 and 6 may be executed in parallel, the sets of nodes may change at any time during the execution of the algorithm of the Fig. 5.

Naturally, many modifications can be made to the embodiments of the invention described above without departing from the scope of the present invention.

## Claims

1. Method for determining which nodes (F1, F2, F3, F4, F5) of a wireless cellular telecommunication network are involved into a parameters optimisation process, a node being a base station or a home base station, **characterised in that** the method comprises the steps of :
- obtaining (S300) information related to the expected availability of nodes for a parameters optimisation process,
- ranking (S301) the nodes according to the expected availabilities,
- forming (S302) plural sets of nodes according to the expected availabilities for a given delay , the delay being defined as the maximum accepted period of time during which parameters for nodes of the set of nodes should be used by each node of the set of nodes once the node becomes available for the parameter optimisation process,
- for each set of nodes, determining parameters (S303) for each node of the set of nodes,
- receiving (S600) a message from one of the nodes, the message notifying the availability of the node for the parameters optimisation process,
- selecting (S602) one set of nodes among the sets of nodes at least according to the rank of the node which sent the message notifying the availability of the node for the parameters optimisation process,
- executing (S604) parameters optimisation process for the nodes comprised in the selected set of nodes using the determined parameters for the nodes of the selected set of nodes.

2. Method according to claim 2, **characterised in that** the selected set of nodes is one set of nodes which comprises the node which sent a message representative of the node availability for the parameters optimisation process.

3. Method according to claim 2, **characterised in that** the selected set of nodes is the set of nodes which comprises no node having a higher rank than the rank of the node which sent the message representative of the node availability for the parameters optimisation process.

4. Method according to claim 2, **characterised in that** the message notifying the availability of the node for the parameters optimisation process is received at a given time and **in that** the selected set of nodes is the set of nodes which corresponds to a set of nodes determined for a time period including or close to said given time.

5. Method according to claim 1, **characterised in that** if the node which sends the message notifying the availability of the node for the parameters optimisation process has the lowest rank, no set of nodes is selected.

6. Method according to claim 1, **characterised in that** the message notifying the availability of the node for the parameters optimisation process is received at a given time and **in that** if the node which sends the message notifying the availability of the node for the parameters optimisation process has the lowest rank, the selected set of nodes is the set of nodes which corresponds to a set of nodes determined for a time period including or close to said given time.

7. Method according to any of the claims I to 6, **characterised in that** the method comprises further step of waiting during a time delay once the parameters optimisation process is executed.

8. Method according to claim 7, **characterised in that** once a node comprised in the selected set of nodes sends the message notifying the availability of the node for the parameters optimisation process within the time period, the determined parameters for the node comprised in the selected set of nodes are applied for the node.

9. Method according to the claim 7 or 8, **characterised in that** the steps of receiving the message from one of the nodes, of selecting one set of nodes among the sets of nodes according to the rank of the node which sent the message notifying the availability of the node for the parameters optimisation process, of executing parameters optimisation process and the waiting steps are consecutive steps executed successively and continuously.

10. Method according to any of the claims 1 to 9, **characterised in that** the steps of obtaining information related to the expected availability of nodes for a parameters optimisation process, of ranking the nodes according to the expected availabilities, of forming plural sets of nodes according to the expected availabilities and of determining, for each set of nodes, parameters for each node of the set of nodes are executed successively and periodically or on particular event.

11. Method according to claim 10, **characterised in that** the method comprises further step of memorizing the ranks of the nodes, the formed sets of nodes and the determined parameters, for each node of each set of nodes.

12. Method according to any of the claims 1 to 11, **characterised in that** parameters determined for one node comprised in a first set of nodes may be different from the parameters determined for the node comprised in a second set of nodes different from the first set of nodes.

13. Device for determining which nodes (F1, F2, F3, F4, F5)of a wireless cellular telecommunication network are involved into a parameters optimisation process, a node being a base station or a home base station, **characterised in that** the device comprises :
- means (S300) for obtaining information related to the expected availability of nodes for a parameters optimisation process,
- means (S301) for ranking the nodes according to the expected availabilities,
- means (S300) for forming plural sets of nodes according to the expected availabilities, for a given delay , the delay being defined as the maximum accepted period of time during which parameters for nodes of the set of nodes should be used by each node of the set of nodes once the node becomes available for the parameter optimisation process,
- means (S302) for determining parameters, for each set of nodes and for each node of the set of nodes,
- means (S600) for receiving a message from one of the nodes, the message notifying the availability of the node for the parameters optimisation process,
- means (S602) for selecting one set of nodes among the sets of nodes at least according to the rank of the node which sent the message notifying the availability of the node for the parameters optimisation process,
- means (S603) for executing parameters optimisation process for the nodes comprised in the selected set of nodes using the determined parameters for the nodes of the selected set of nodes.

14. Device according to claim 13, **characterised in that** the device for determining which nodes of a wireless cellular telecommunication network are involved into the parameters optimisation process is a dedicated device or is comprised in a node of the wireless cellular telecommunication network or in a base station of the wireless cellular telecommunication network.

15. Computer program which can be directly loadable into a programmable device, comprising instructions or portions of code for implementing the steps of the method according to claims 1 to 12, when said computer program is executed on a programmable device.

## Patentansprüche

1. Verfahren zum Bestimmen, welche Knoten (F1, F2, F3, F4, F5) eines drahtlosen zellularen Telekommunikationsnetzwerks in einem Parameteroptimierungsprozess beteiligt sind, wobei ein Knoten eine Basisstation oder eine Heim-Basisstation ist, **dadurch gekennzeichnet, dass** das Verfahren die folgenden Schritte aufweist:
- Erhalten (S300) von Information in Bezug auf die erwartete Verfügbarkeit von Knoten für einen Parameteroptimierungsprozess,
- Einordnen (S301) der Knoten gemäß den erwarteten Verfügbarkeiten,
- Ausbilden (S302) mehrerer Gruppen von Knoten gemäß den erwarteten Verfügbarkeiten für eine gegebene Verzögerung, wobei die Verzögerung als die maximale akzeptierte Zeitperiode definiert ist, während welcher Parameter für Knoten der Gruppe von Knoten durch jeden Knoten der Gruppe von Knoten verwendet werden sollte, wenn der Knoten einmal für den Parameteroptimierungsprozess verfügbar wird,
- für jede Gruppe von Knoten Bestimmen von Parametern (S303) für jeden Knoten der Gruppe von Knoten,
- Empfangen (S600) einer Nachricht von einem der Knoten, wobei die Nachricht die Verfügbarkeit des Knotens für den Parameteroptimierungsprozess mitteilt,
- Auswählen (S602) einer Gruppe von Knoten unter den Gruppen von Knoten wenigstens gemäß dem Rang des Knotens, der die Nachricht sendete, die die Verfügbarkeit des Knotens für den Parameteroptimierungsprozess mitteilt,
- Ausführen (S604) eines Parameteroptimierungsprozesses für die in der ausgewählten Gruppe von Knoten umfassten Knoten unter Verwendung der bestimmten Parameter für den Knoten der ausgewählten Gruppe von Knoten.

2. Verfahren nach Anspruch 1, **dadurch gekennzeichnet, dass** die ausgewählte Gruppe von Knoten eine Gruppe von Knoten ist, die den Knoten umfasst, der eine Nachricht sendete, die die Knotenverfügbarkeit für den Parameteroptimierungsprozess darstellt.

3. Verfahren nach Anspruch 2, **dadurch gekennzeichnet, dass** die ausgewählte Gruppe von Knoten die Gruppe von Knoten ist, die keinen Knoten umfasst, der einen höheren Rang als den Rang des Knotens hat, der die Nachricht sendete, die die Knotenverfügbarkeit für den Parameteroptimierungsprozess darstellt.

4. Verfahren nach Anspruch 2, **dadurch gekennzeichnet, dass** die Nachricht, die die Verfügbarkeit des Knotens für den Parameteroptimierungsprozess mitteilt, zu einer gegebenen Zeit empfangen wird und dass die ausgewählte Gruppe von Knoten die Gruppe von Knoten ist, die einer Gruppe von Knoten entspricht, die für eine Zeitperiode bestimmt ist, die die gegebene Zeit enthält oder dieser nahe ist.

5. Verfahren nach Anspruch 1, **dadurch gekennzeichnet, dass** dann, wenn der Knoten, der die Nachricht sendet, die die Verfügbarkeit des Knotens für den Parameteroptimierungsprozess mitteilt, den niedrigsten Rang hat, keine Gruppe von Knoten ausgewählt wird.

6. Verfahren nach Anspruch 1, **dadurch gekennzeichnet, dass** die Nachricht, die die Verfügbarkeit des Knotens für den Parameteroptimierungsprozess mitteilt, zu einer gegebenen Zeit empfangen wird und dass dann, wenn der Knoten, der die Nachricht sendet, die die Verfügbarkeit des Knotens für den Parameteroptimierungsprozess mitteilt, den niedrigsten Rang hat, die ausgewählte Gruppe von Knoten die Gruppe von Knoten ist, die einer Gruppe von Knoten entspricht, die für eine Zeitperiode bestimmt ist, die die gegebene Zeit enthält oder dieser nahe ist.

7. Verfahren nach einem der Ansprüche 1 bis 6, **dadurch gekennzeichnet, dass** das Verfahren einen weiteren Schritt eines Wartens während einer Zeitverzögerung aufweist, wenn der Parameteroptimierungsprozess einmal ausgeführt wird.

8. Verfahren nach Anspruch 7, **dadurch gekennzeichnet, dass** dann, wenn einmal ein Knoten, der in der ausgewählten Gruppe von Knoten umfasst ist, die Nachricht, die die Verfügbarkeit des Knotens für den Parameteroptimierungsprozess mitteilt, innerhalb der Zeitperiode sendet, die bestimmten Parameter für den Knoten, der in der ausgewählten Gruppe von Knoten umfasst ist, für den Knoten angewendet werden.

9. Verfahren nach Anspruch 7 oder 8, **dadurch gekennzeichnet, dass** die Schritte des Empfangens der Nachricht von einem der Knoten, des Auswählens einer Gruppe von Knoten unter den Gruppen von Knoten gemäß dem Rang des Knotens, der die Nachricht sendete, die die Verfügbarkeit des Knotens für den Parameteroptimierungsprozess mitteilt, des Ausführens eines Parameteroptimierungsprozesses und die Warteschritte aufeinanderfolgende Schritte sind, die sukzessiv und kontinuierlich ausgeführt werden.

10. Verfahren nach einem der Ansprüche 1 bis 9, **dadurch gekennzeichnet, dass** die Schritte des Erhaltens von Information in Bezug auf die erwartete Verfügbarkeit von Knoten für einen Parameteroptimierungsprozess, des Einordnens der Knoten gemäß den erwarteten Verfügbarkeiten, des Ausbildens mehrerer Gruppen von Knoten gemäß den erwarteten Verfügbarkeiten und, für jede Gruppe von Knoten, des Bestimmens von Parametern für jeden Knoten der Gruppe von Knoten sukzessiv und periodisch oder bei einem speziellen Ereignis ausgeführt werden.

11. Verfahren nach Anspruch 10, **dadurch gekennzeichnet, dass** das Verfahren einen weiteren Schritt eines Merkens der Ränge der Knoten, der ausgebildeten Gruppen von Knoten und der bestimmten Parameter für jeden Knoten jeder Gruppe von Knoten aufweist.

12. Verfahren nach einem der Ansprüche 1 bis 11, **dadurch gekennzeichnet, dass** Parameter, die für einen Knoten bestimmt sind, der in einer ersten Gruppe von Knoten umfasst ist, von den Parametern unterschiedlich sein können, die für den Knoten bestimmt sind, der in einer zweiten Gruppe von Knoten umfasst ist, die unterschiedlich von der ersten Gruppe von Knoten ist.

13. Vorrichtung zum Bestimmen, welche Knoten (F1, F2, F3, F4, F5) eines drahtlosen zellularen Telekommunikationsnetzwerks in einem Parameteroptimierungsprozess beteiligt sind, wobei ein Knoten eine Basisstation oder eine Heim-Basisstation ist, **dadurch gekennzeichnet, dass** die Vorrichtung folgendes aufweist:
- Mittel (S300) zum Erhalten von Information in Bezug auf die erwartete Verfügbarkeit von Knoten für einen Parameteroptimierungsprozess,
- Mittel (S301) zum Einordnen der Knoten gemäß den erwarteten Verfügbarkeiten,
- Mittel (S300) zum Ausbilden mehrerer Gruppen von Knoten gemäß den erwarteten Verfügbarkeiten für eine gegebene Verzögerung, wobei die Verzögerung als die maximale akzeptierte Zeitperiode definiert ist, während welcher Parameter für Knoten der Gruppe von Knoten durch jeden Knoten der Gruppe von Knoten verwendet werden sollte, wenn der Knoten einmal für den Parameteroptimierungsprozess verfügbar wird,
- Mittel (S302) zum Bestimmen von Parametern für jede Gruppe von Knoten und für jeden Knoten der Gruppe von Knoten,
- Mittel (S600) zum Empfangen einer Nachricht von einem der Knoten, wobei die Nachricht die Verfügbarkeit des Knotens für den Parameteroptimierungsprozess mitteilt,
- Mittel (S602) zum Auswählen einer Gruppe von Knoten unter den Gruppen von Knoten wenigstens gemäß dem Rang des Knotens, der die Nachricht sendete, die die Verfügbarkeit des Knotens für den Parameteroptimierungsprozess mitteilt,
- Mittel (S603) zum Ausführen eines Parameteroptimierungsprozesses für die in der ausgewählten Gruppe von Knoten umfassten Knoten unter Verwendung der bestimmten Parameter für den Knoten der ausgewählten Gruppe von Knoten.

14. Vorrichtung nach Anspruch 13, **dadurch gekennzeichnet, dass** die Vorrichtung zum Bestimmen, welche Knoten eines drahtlosen zellularen Telekommunikationsnetzwerks in dem Parameteroptimierungsprozess beteiligt sind, eine zweckbestimmte Vorrichtung ist oder in einem Knoten des drahtlosen zellularen Telekommunikationsnetzwerks oder in einer Basisstation des drahtlosen zellularen Telekommunikationsnetzwerks umfasst ist.

15. Computerprogramm, das direkt ladbar in eine programmierbare Vorrichtung sein kann, mit Anweisungen oder Teilbereichen eines Codes zum Implementieren der Schritte des Verfahrens nach den Ansprüchen 1 bis 12, wenn das Computerprogramm auf einer programmierbaren Vorrichtung ausgeführt wird.

## Revendications

1. Méthode pour déterminer quels noeuds (F1, F2, F-3, F4, F5) d'un réseau de télécommunication cellulaire sans fil sont impliqués dans un processus d'optimisation de paramètres, un noeud étant une station de base ou une station de base domestique, **caractérisée en ce que** la méthode comporte les étapes de :
- obtention (S300) d'informations relatives à la disponibilité escomptée des noeuds pour un processus d'optimisation de paramètres,
- classement (S301) des noeuds selon les disponibilités escomptées,
- formation (S302) de plusieurs ensembles de noeuds selon les disponibilités escomptées pour un retard donné, le retard étant défini comme la période admise maximale pendant laquelle des paramètres pour des noeuds de l'ensemble de noeuds devraient être employés par chaque noeud de l'ensemble de noeuds une fois que les noeuds deviennent disponibles pour le processus d'optimisation de paramètres,
- pour chaque ensemble de noeuds, détermination des paramètres (S303) pour chaque noeud de l'ensemble de noeuds,
- réception (S600) d'un message d'un des noeuds, le message informant la disponibilité du noeud pour le processus d'optimisation de paramètres,
- choix (S602) d'un ensemble de noeuds parmi les ensembles de noeuds au moins selon le classement du noeud qui a envoyé le message informant la disponibilité du noeud pour le processus d'optimisation de paramètres,
- exécution du processus d'optimisation de paramètres (S604) pour les noeuds compris dans l'ensemble choisi de noeuds utilisant les paramètres déterminés pour les noeuds de l'ensemble choisi de noeuds.

2. Méthode selon la revendication 2, **caractérisée en ce que** l'ensemble choisi de noeuds est un ensemble de noeuds qui comporte le noeud qui a envoyé un message représentatif de la disponibilité du noeud pour le processus d'optimisation de paramètres.

3. Méthode selon la revendication 2, **caractérisée en ce que** l'ensemble choisi de noeuds est l'ensemble de noeuds qui ne comporte aucun noeud ayant un classement plus élevé que le classement du noeud qui a envoyé un message représentatif de la disponibilité du noeud pour le processus d'optimisation de paramètres.

4. Méthode selon la revendication 2, **caractérisée en ce que** le message informant la disponibilité du noeud pour le processus d'optimisation de paramètres est reçu à un moment donné et **en ce que** l'ensemble choisi de noeuds est l'ensemble de noeuds ce qui correspond à un ensemble de noeuds déterminés pour une période de temps incluant le ou près dudit moment donné.

5. Méthode selon la revendication 1, **caractérisée en ce que** si le noeud qui envoie le message informant la disponibilité du noeud pour le processus d'optimisation de paramètres a le classement le plus bas, aucun ensemble de noeuds est choisi.

6. Méthode selon la revendication 1, **caractérisée en ce que** le message informant la disponibilité du noeud pour le processus d'optimisation de paramètres est reçu à un moment donné et **en ce que** si le noeud qui envoie le message informant la disponibilité du noeud pour le processus d'optimisation de paramètres a le classement le plus bas, l'ensemble choisi de noeuds est l'ensemble de noeuds qui correspond à un ensemble de noeuds déterminé pendant une période de temps incluant le ou près dudit moment donné.

7. Méthode selon l'une des revendications 1 à 6, **caractérisée en ce que** la méthode comporte en outre l'étape d'attente pendant un temps de retard une fois que le processus d'optimisation de paramètres est exécuté.

8. Méthode selon la revendication 7, caractérisée en ce lorsqu'un noeud compris dans l'ensemble choisi de noeuds envoie le message informant la disponibilité du noeud pour le processus d'optimisation de paramètres au cours de la période de temps, les paramètres déterminés pour le noeud compris dans l'ensemble choisi de noeuds sont appliquées pour le noeud.

9. Méthode selon la revendication 7 ou 8, **caractérisée en ce que** les étapes de réception du message d'un des noeuds, de choix d'un ensemble de noeuds parmi les ensembles de noeuds selon le classement du noeud qui a envoyé le message informant la disponibilité du noeud pour le processus d'optimisation de paramètres, d'exécution du processus d'optimisation de paramètres et les étapes d'attente sont des étapes consécutives exécutées successivement et continuellement.

10. Méthode selon l'une des revendications à 1 à 9, **caractérisée en ce que** les étapes de l'obtention relatives à l'information à la disponibilité prévue des noeuds pour un processus d'optimisation de paramètres, de classement des noeuds selon les disponibilités prévues, de formation d'une pluralité d'ensembles de noeuds selon les disponibilités prévues et de détermination, pour chaque ensemble de noeuds, des paramètres pour chaque noeud de l'ensemble de noeuds sont exécutées successivement et périodiquement ou sur événement particulier.

11. Méthode selon la revendication 10, **caractérisée en ce que** la méthode comporte en outre l'étape de mémorisation des classement des noeuds, des ensembles formés de noeuds et des paramètres déterminés, pour chaque noeud de chaque ensemble de noeuds.

12. Méthode selon l'une des revendications 1 à 11, **caractérisée en ce que** des paramètres déterminés pour un noeud compris dans un premier ensemble de noeuds peuvent être différentes des paramètres déterminés pour le noeud comporté dans un deuxième ensemble de noeuds différents du premier ensemble de noeuds.

13. Dispositif pour déterminer quels noeuds (F1, F2, F-3, F4, F5) d'un réseau de télécommunication cellulaire sans fil sont impliqués dans un processus d'optimisation de paramètres, un noeud étant une station de base ou une station de base domestique, **caractérisé en ce que** le dispositif comporte :
- des moyens (S300) d'obtention d'informations relatives à la disponibilité escomptée des noeuds pour un processus d'optimisation de paramètres,
- des moyens de classement (S301) des noeuds selon les disponibilités escomptées,
- des moyens de formation (S302) de plusieurs ensembles de noeuds selon les disponibilités escomptées pour un retard donné, le retard étant défini comme la période admise maximale pendant laquelle des paramètres pour des noeuds de l'ensemble de noeuds devraient être employés par chaque noeud de l'ensemble de noeuds une fois que les noeuds deviennent disponibles pour le processus d'optimisation de paramètres,
- des moyens de détermination des paramètres (S303) pour chaque noeud de l'ensemble de noeuds de chaque ensemble de noeuds,
- des moyens de réception (S600) d'un message d'un des noeuds, le message informant la disponibilité du noeud pour le processus d'optimisation de paramètres,
- des moyens de choix (S602) d'un ensemble de noeuds parmi les ensembles de noeuds au moins selon le classement du noeud qui a envoyé le message informant la disponibilité du noeud pour le processus d'optimisation de paramètres,
- des moyens d'exécution du processus d'optimisation de paramètres (S604) pour les noeuds compris dans l'ensemble choisi de noeuds utilisant les paramètres déterminés pour les noeuds de l'ensemble choisi de noeuds.

14. Dispositif selon la revendication 13, **caractérisée en ce que** le dispositif pour déterminer quels noeuds d'un réseau de télécommunication cellulaire sans fil sont impliqués dans le processus d'optimisation de paramètres est un dispositif dédié ou est compris dans un noeud du réseau de télécommunication cellulaire sans fil ou dans une station de base du réseau de télécommunication cellulaire sans fil.

15. Programme d'ordinateur qui peut être directement chargeable dans un dispositif programmable, comportant des instructions ou des parties du code pour mettre en application les étapes de la méthode selon les revendications 1 à 12, quand ledit programme informatique est exécuté sur un dispositif programmable.
